# EUROPÄISCHE PATENTSCHRIFT

(11) **EP 3 050 795 B1**
(45) Veröffentlichungstag und Bekanntmachung des Hinweises auf die Patenterteilung: **03.01.2018**
(21) Anmeldenummer: 16151880.8
(22) Anmeldetag: 19.01.2016
(51) Int. Cl.: B64C 1/18, B64C 27/04

(54) **HUBSCHRAUBERKABINE**
HELICOPTER CABIN
CABINE D'HELICOPTERE

(30) Priorität: 28.01.2015 CH 1022015
(43) Veröffentlichungstag der Anmeldung: 03.08.2016
(73) Patentinhaber: Marenco Swisshelicopter AG, 8753 Mollis (CH)
(72) Erfinder: Stucki, Martin, 8330 Pfäffikon (CH)
(74) Vertreter: Schneider Feldmann AG Patent- und Markenanwälte

(56) Entgegenhaltungen:
- EP-A2- 2 492 189
- CN-A- 103 955 578
- DE-T2-602006 000 780
- RU-C1- 2 232 103
- US-A- 5 562 264
- US-A1- 2012 187 717

## Beschreibung

### Technisches Gebiet

Die vorliegende Erfindung beschreibt eine Hubschrauberkabine, welche auf einer Rumpfstruktur eines Hubschraubers befestigbar ist, umfassend eine Kabinenbodenfläche, welche sich von einem Frontbereich zu einem Heckbereich der Hubschrauberkabine erstreckt, wobei im Frontbereich Frontsitze und Pilotenkabinentüren angeordnet sind und die Pilotenkabinentüren zusammen mit einer Frontfläche und weiteren Wänden einen Teil einer Aussenhülle der Hubschrauberkabine, die Kabinenbodenfläche umgebend, bilden.

### Stand der Technik

In den letzten Jahren wurden Hubschrauber bzw. Helikopter in einigen Bereichen technisch verbessert, wobei in der Regel das Augenmerk auf die Antriebs- und Steuerungstechnik, sowie auf die Verbesserung der Flugeigenschaften durch Abfangen asymmetrischer Kräfte auf den Rotorkopf gelegt wurde.
Hubschrauber weisen unterschiedlich gestaltete Rumpfstrukturen und Ausgestaltungen der auf der Rumpfstruktur befestigten Hubschrauberkabine auf, wie in den Dokumenten RU2232103, US5562264, CN103955578, EP2492189, US20120187717 und DE602006000780 exeplarisch offenbart. Die Rumpfstruktur und die Hubschrauberkabine sind auf einem Landegestell vom Boden beabstandet befestigt. Die Landegestelle können dabei entweder als Kufenlandegestell oder als Gestell mit Rädern ausgebildet sein. Die Hubschrauberkabine der hier interessierenden eher kleineren und wendigeren Hubschrauber weist in der Regel jeweils eine schwenkbare Pilotentür und eine Co-Pilotentür auf. Diese Kabinentüren sind teilweise verglast, damit die Piloten während des Fluges auch einen seitlich Ausblick aus der Hubschrauberkabine haben.

Die heute bekannten Kabinentüren im Bereich des Piloten- und Co-Pilotensitzes erlauben das Einsteigen von Piloten bzw. Personen in die Hubschrauberkabine im Frontbereich. Unter sehr begrenzten Platzbedingungen hangelt sich ein Pilot dabei vom Landegestell bzw. einem Trittbrett am Landegestell als Stufe auf dem ihm zugewiesenen Pilotensitz. Als Beispiel ist in Figur 1 der Einblick in eine Hubschrauberkabine gemäss der EP2492189 der Anmelderin gezeigt. Mit dem dargestellten Pfeil ist der Einstiegsweg des Piloten über ein Trittbrett am Landegestell bis auf die Kabinenbodenfläche der Rumpfstruktur in die Hubschrauberkabine angedeutet.

Es wurden bisher keine Massnahmen getroffen, dass ein Ein- und Aussteigen bei derartigen Hubschraubern verbessert wird. Diese Situation für den Pilot bzw. Co-Pilot wurde bislang beispielsweise durch Variation der Höhe des Landegestells und damit durch Variation des Abstands des Kabinenbodens zum Untergrund in engen Grenzen variiert. In der Praxis gestaltet sich der Ein- und Ausstieg aber immer noch wenig komfortabel, da ein Schritt durch die Türaussparung in der Hubschrauberkabine bei gleichzeitig stark gebückter Haltung bis zur Erreichung des Pilotensitzes gemacht werden muss. Da man bislang kaum in den Kabineninnenraum hineinlangen kann, muss eine Person in der Regel auf einem der Pilotensitze platznehmen, um Einstellungen an der Bordelektronik zu machen oder Parameter zu überprüfen.

### Darstellung der Erfindung

Die Anmelderin hat sich zum Ziel gesetzt eine Hubschrauberkabine eines kleinen, wendigen und vor allem vielseitig einsetzbaren Hubschraubers in der sogenannten Leichtklasse herzustellen, welche einen gesteigerten Komfort aufweist.

Dazu ist eine Möglichkeit gefunden worden, die Ein- und Ausstiegsmöglichkeiten bei auf dem Boden aufgesetztem Hubschrauber komfortabler zu gestalten. Dies wird durch eine besondere Ausgestaltung des Kabinenbodens bzw. der Kabinenbodenfläche gemäß den Merkmalen des Anspruchs 1 erreicht.
Neben der Optimierung des Ein- und Ausstiegs kann bei entsprechender Abstimmung der Gestaltung der vorderen Kabinentüren und damit der Pilotenkabinentüren zusätzlich eine Sichtverbesserung erreicht werden, welche während des Fluges beim Durchführen von Unterlastaufgaben vorteilhaft ist.

### Kurze Beschreibung der Zeichnungen

Weitere Merkmale, Einzelheiten und Vorzüge der Erfindung ergeben sich aus der nachfolgenden Beschreibung bevorzugter Ausführungsformen der Erfindung sowie der Zeichnungen. Es sind dargestellt in
- Figur 1: eine perspektivische Ansicht einer Hubschrauberkabine eines Hubschraubers bei Weglassung der Pilotensitztür und des Daches gemäss Stand der Technik.
- Figur 2: zeigt eine Seitenansicht eines Hubschraubers von der Co-Pilotenseite mit geschlossener Co-Pilotensitztür und Heckschiebetür, wobei der Heckrotor nicht dargestellt ist.
- Figur 3: zeigt eine Schnittansicht einer Hubschrauberkabine entlang der Linie A-A gemäss Figur 2, wobei die Pilotensitztüren beidseitig geöffnet sind. Zur besseren Veranschaulichung sind auch die Heckschiebetüren im Heckbereich der Hubschrauberkabine geöffnet.
- Figur 4: zeigt eine perspektivische Ansicht einer Hubschrauberkabine vom Heckbereich zum Frontbereich von der Pilotenseite, wobei die Pilotensitztür geöffnet ist, während
- Figur 5: eine Seitenansicht der Hubschrauberkabine gemäss Figur 4 von der Co-Pilotenseite zeigt.

### Beschreibung

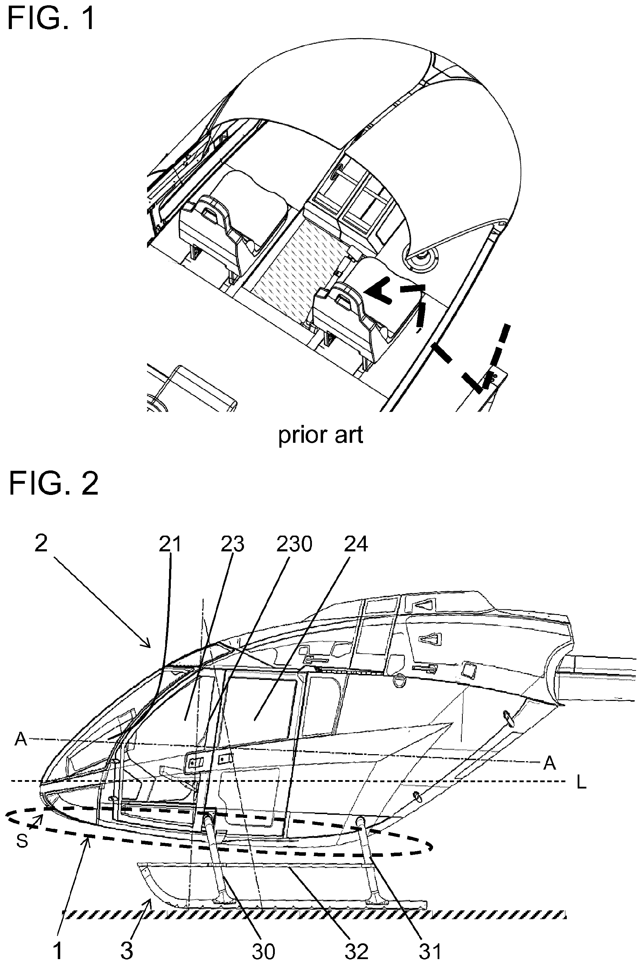

In den Figuren 2 bis 5 ist jeweils eine Hubschrauberkabine 2 eines Hubschraubers bzw. Teile der Hubschrauberkabine 2 im Detail dargestellt, da die Erfindung die Ausgestaltung der Hubschrauberkabine 2 bzw. Teile der Hubschrauberkabine 2 betrifft. Diese Hubschrauberkabine 2 ist Teil eines kleinen, wendigen und vor allem vielseitig einsetzbaren Hubschraubers in der sogenannten Leichtklasse.

Die Hubschrauberkabine 2 ist mit einer Rumpfstruktur 1 verbunden, auf welcher Teile der Hubschrauberkabine 2 lagern und die von Teilen der Hubschrauberkabine 2 verdeckt ist. Ein Landegestell 3 schliesst sich an die Rumpfstruktur 1 an. Das Landegestell 3 ist hier als Kufenlandegestell 30 ausgeführt, welches aus mehreren Kufenrohren 31 besteht und zusätzlich ein Trittbrett 32 aufweist. Im ruhenden Zustand steht das Kufenlandegestell 30 mit seinen Kufenrohren 31 auf einem Untergrund und beabstandet die Hubschrauberkabine 2 vom Untergrund.

Die Hubschrauberkabine 2 erstreckt sich von einem Frontbereich mit einer Spitze S bis zu einem Heckbereich, an welchen sich der nicht dargestellte Aufbau für einen Heckrotor anschliesst. Im Frontbereich der Hubschrauberkabine 2 ist eine Cockpiteingabekonsole 21 angeordnet, welche von einem Piloten bzw. Co-Piloten bedient werden kann. Die Aussenhülle der Hubschrauberkabine 2 weist im Frontbereich Pilotenkabinentüren 23 auf, welche als Klapp- oder Schwenktüren gestaltet sind, jeweils einen Türrahmen 230 aufweisen und mindestens eine teilweise Verglasung. Im Heckbereich der Hubschrauberkabine 2 ist mindestens einseitig eine Laderaumschiebetür 24 angeordnet. Die Türen 23, 24 bilden zusammen mit einer Frontfläche, welche möglichst grossflächig transparent ausgebildet ist und Wänden im Heckbereich einen Teil der Aussenhülle der Hubschrauberkabine 2, welche den Kabineninnenraum umschliesst.

In der Schnittdarstellung durch die Hubschrauberkabine 2 entlang der Schnittlinie A-A aus Figur 2, ist eine Hubschrauberkabine 2 mit geöffneten Pilotenkabinentüren 23, 23' als Pilotenkabinentür 23 und Co-Pilotenkabinentür 23' dargestellt. Diese Pilotenkabinentüren 23 befinden sich im Frontbereich der Hubschrauberkabine 2, während sich die geöffneten Laderaumschiebetüren 24, 24' im Heckbereich der Hubschrauberkabine 2 befinden. Im Frontbereich auf der Höhe der Pilotenkabinentüren 23, 23' sind Frontsitze 22 als Pilotensitz 22 und Co-Pilotensitz 22' angeordnet.

Die Hubschrauberkabine 2 weist eine Kabinenbodenfläche 20 auf, welche den gesamten Kabineninnenraum zur Rumpfstruktur 1 abdeckt. Die Kabinenbodenfläche 20 weist hier eine sich verändernde Breite im Verlauf vom Heckbereich zum Frontbereich verlaufend auf. Die Kabinenbodenfläche 20 ist dabei in Richtung senkrecht zur Längsachse L der Hubschrauberkabine 2 tailliert ausgestaltet. Ein Ausschnitt a durch welchen die Taillierung der Kabinenbodenfläche 20 erreicht ist, erstreckt sich vom Frontbereich bis in den Heckbereich. Die resultierende Breite B von den Rändern der Kabinenbodenfläche 20 im taillierten Bereich ist kleiner, als die Breite im Heckbereich und/oder im Frontbereich der Hubschrauberkabine 2. Die resultierende Breite B erstreckt sich möglichst zwischen den Aussenrändern der Pilotensitze 23, 23'. Man kann eine Ausschnitttiefe t definieren, die in der Grössenordnung grösser acht Zentimeter liegt. Der maximal mögliche Ausschnitt a wird durch die Positionierung der Frontsitze 22, 22' begrenzt, um eine ausreichend stabile Kabinenbodenfläche 20 zu gewährleisten.

Ein vergrösserter Abstand des Randes der Kabinenbodenfläche 20 zu den Kufenrohren 31 des Landegestells 3 wird durch Ausgestaltung des Ausschnittes a erreicht. Sollte die Hubschrauberkabine 2 nur von einer Seite zugänglich sein, dann wird der Ausschnitt a entsprechend nur auf der Piloten- oder Co-Pilotenseite angeordnet.

In einer bevorzugten Ausführungsform weisen die Pilotenkabinentüren 23 zusätzlich einen gewölbt gestalteten Türrahmen 230, sowie eine gewölbte transparente Türfläche 231 auf. In einem Bodenabschnitt 232 der Pilotenkabinentüren 23 ist die Türfläche 231 und der Türrahmen 230 derart gewölbt geformt, dass der Bodenabschnitt 232 bei geschlossener Pilotenkabinentür 23 teilweise über den Ausschnitt a ragen kann. Der Bodenabschnitt 232 ist in der Geschlossenstellung mindestens teilweise unterhalb der Kabinenbodenfläche 20 gewölbt bis zur Rumpfstruktur 1 geführt. Der gewölbte und transparent ausgeführte Bodenabschnitt 232 überdeckt damit den Ausschnitt a mindestens teilweise in der Geschlossenstellung. In der Offenstellung ist der Zugang zur Kabinenbodenfläche 20 aufgrund der Taillierung im Bereich der Frontsitze 22 erleichtert.

Auch die Laderaumschiebetüren 24, 24' können einen gewölbten Bodenabschnitt 240, 240' aufweisen, welcher optional ebenfalls transparent ausgebildet sein kann. Auch hier kann neben einem erleichterten Zugang der am Boden befindlichen Hubschrauberkabine 2 auch eine verbesserte Sicht nach unten während des Fluges erreicht werden.

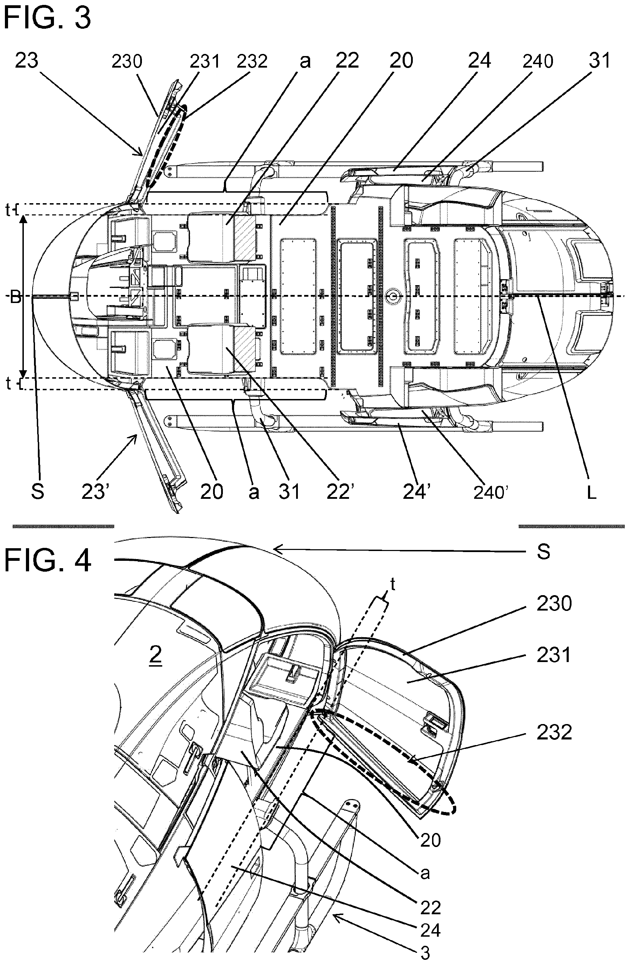

Aus der perspektivischen Ansicht auf und in eine Hubschrauberkabine 2 gemäss Figur 4 ist der Raumgewinn durch Aussparung des Ausschnittes a auf Höhe der Pilotenkabinentüren 23 nochmals deutlich gemacht. Der gewölbte Bodenabschnitt 232 der Pilotenkabinentür 23, durch die gestrichelte Ellipse gekennzeichnet, gibt den Ausschnitt a bei geöffneter Pilotenkabinentür 23 vollständig frei. Der Pilot kann vereinfacht einsteigen und direkt zum Pilotensitz 22 gelangen, da die Kabinenbodenfläche 20 nahezu bis zum Pilotensitz 22 ausgeschnitten und damit zum Frontbereich hin verjüngt ist. Durch die Anordnung des Ausschnittes a kann der Pilot auch zwischen Landegestell 3 bzw. Trittbrett 32 und Kabinenbodenfläche 20 treten und in den Kabineninnenraum hineinlangen, um die Elektronik zu prüfen oder Einstellungen zu machen, ohne, dass ein Einsteigen zwingend nötig ist. Dies gilt natürlich auch auf der Co-Pilotenseite, wenn ein Ausschnitt a in der Kabinenbodenfläche 20 angebracht ist.

Je nach Länge des Ausschnittes a kann der Ein- und Ausstieg in den Laderaum durch die Laderaumschiebetür 24 aufgrund der taillierten Kabinenbodenfläche 20 erleichtert sein.

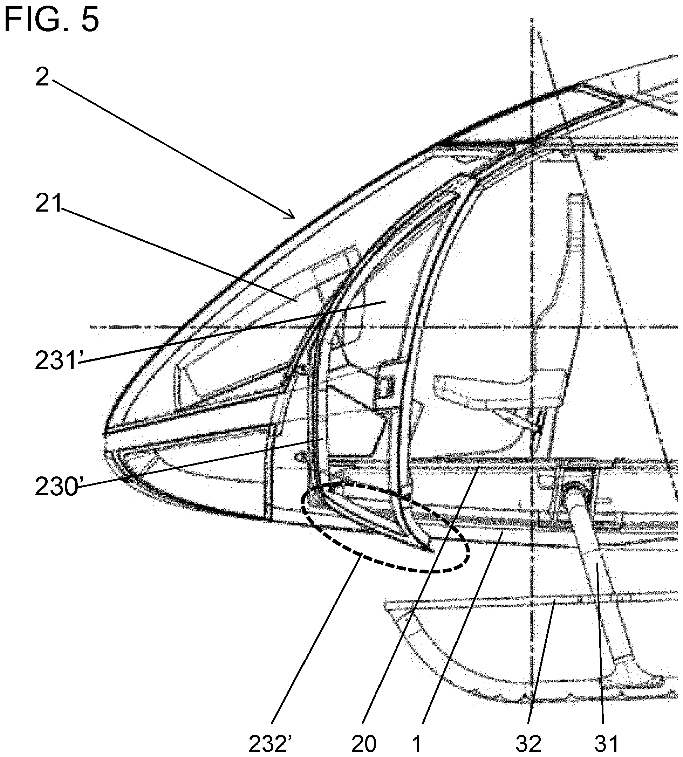

In der Teilansicht der Hubschrauberkabine 2 gemäss Figur 5 ist eine möglichst grossflächige transparente Ausgestaltung der Frontscheibe bzw. möglichst des gesamten Frontbereiches der Hubschrauberkabine 2 erkennbar, womit eine optimale Sicht erreicht werden soll. Ist die Kabinenoberfläche 20 mit einem Ausschnitt a und damit einer Taillierung ausgestaltet und zusätzlich ein transparenter gewölbter Bodenabschnitt 232' in der Pilotenkabinentür 23, 23' angeordnet, so ist bei geschlossener Pilotenkabinentür 23' eine zusätzliche Sichtverbesserung erreichbar. Der gewölbte Bodenabschnitt 232' ist an der Pilotenkabinentür 23' derart angeformt, dass dieser Bodenabschnitt 232' bei geschlossener Pilotenkabinentür 23' den Kabineninnenraum unterhalb der Kabinenoberfläche 20 abschliesst.

Bei geschlossener Pilotenkabinentür 23' kann der Pilot bzw. Co-Pilot durch den Ausschnitt a in der Kabinenoberfläche 20 und die Rumpfstruktur 1 unter die Hubschrauberkabine 2 blicken, was beim Durchführen von Unterlastaufgaben vorteilhaft ist. Die Rumpfstruktur 1 muss entsprechend ausgestaltet sein und eine Durchsicht durch die Pilotenkabinentür 23' erlauben.

Um eine optimierte Seitensicht zu gewährleisten, kann die gewölbte transparente Türfläche 231, 231' sowie die Laderaumschiebetür 24 vollständig transparent ausgestaltet sein und nicht nur im Bereich des Bodenabschnittes 232, 232', 240. Mit modernen heute erhältlichen Materialien wie Acrylglas bzw. Plexiglas und abgestimmten Formgebungen der Türrahmen 230, können nahezu vollständig transparente Türflächen 231 hergestellt werden.

Die erfindungsgemässe Ausgestaltung der Hubschrauberkabine 2 bzw. der Rumpfstruktur 1, sowie der Pilotenkabinentüren 23, 23' kann auch für Mischformen aus Flugzeug und Drehflügler oder Tragschrauber genutzt werden, sofern, der Einstieg des Piloten und Co-Piloten durch die entsprechenden Pilotenkabinentüren 23, 23' erfolgt.

### Bezugszeichenliste

- 1: Rumpfstruktur
- 2: Hubschrauberkabine (Aufbau auf Rumpfstruktur)
S Spitze
L Längsachse
20 Kabinenbodenfläche
a Ausschnitt/Taillierung
t Ausschnitttiefe
B resultierende Breite
21 Cockpiteingabekonsole
22 Frontsitze(Pilotensitz, Co-Pilotensitz
23 Pilotenkabinentür
230 Türrahmen
231 gewölbte transparente Türfläche
232 Bodenabschnitt gewölbt/ transparent
24 Laderaumschiebetür
240 gewölbter Bodenabschnitt (transparent)
- 3: Landegestell
30 Kufenlandegestell
31 Kufenrohr
32 Trittbrett

## Patentansprüche

1. Hubschrauberkabine (2), welche auf einer Rumpfstruktur (1) eines Hubschraubers befestigbar ist, umfassend eine Kabinenbodenfläche (20), welche sich von einem Frontbereich zu einem Heckbereich der Hubschrauberkabine (2) erstreckt, wobei im Frontbereich Frontsitze (22, 22') und Pilotenkabinentüren (23, 23') angeordnet sind und die Pilotenkabinentüren (23, 23') zusammen mit einer Frontfläche und weiteren Wänden einen Teil einer Aussenhülle der Hubschrauberkabine (2), die Kabinenbodenfläche (20) umgebend, bilden, **dadurch gekennzeichnet, dass**
die Kabinenbodenfläche (20) der Hubschrauberkabine (2) im Bereich der Frontsitze (22, 22') in Richtung Längsachse (L) tailliert einen Ausschnitt (a) mit einer Ausschnitttiefe (t) zur Längsachse (L) hin gerichtet aufweist.

2. Hubschrauberkabine nach Anspruch 1, **wobei**
die Ausschnitttiefe (t) des Ausschnitts (a) bis zu den Aussenrändern der Pilotensitze (23, 23') ragt, sodass eine resultierende Breite (B) im taillierten Bereich resultiert, die kleiner ist, als die Breite der Kabinenbodenfläche (20) im Frontbereich und/oder im Heckbereich an der breitesten Stelle.

3. Hubschrauberkabine nach Anspruch 1, **wobei**
der Ausschnitt (a) in der Kabinenbodenfläche (20) in Richtung parallel zur Längsachse (L) bis in den Heckbereich und damit in den Bereich der Laderaumschiebetür (24) ragt.

4. Hubschrauberkabine nach Anspruch 3, **wobei** die Ausschnitttiefe (t) mindestens 8 cm beträgt.

5. Hubschrauberkabine nach einem der vorhergehenden Ansprüche, **wobei** ein der Rumpfstruktur (1) zugewandter Bodenabschnitt (232) der Pilotenkabinentür (23, 23') transparent und gewölbt derart ausgestaltet ist, dass der Ausschnitt (a) in der Kabinenbodenfläche (20) bei geschlossener Pilotenkabinentür (23, 23') mindesten teilweise von dem Bodenabschnitt (232) überdeckt ist.

6. Hubschrauberkabine nach Anspruch 5, **wobei** der gewölbte transparente Bodenabschnitt (232) im geschlossenen Zustand der Pilotenkabinentür (23, 23') mindestens teilweise unter die Kabinenbodenfläche (20) ragt.

7. Hubschrauberkabine nach Anspruch 3, **wobei** ein der Rumpfstruktur (1) zugewandter Bodenabschnitt (240) der Laderaumschiebetür (24) transparent und gewölbt derart ausgestaltet ist, dass der Ausschnitt (a) in der Kabinenbodenfläche (20) im Heckbereich bei geschlossener Laderaumschiebetür (24) mindesten teilweise von dem Bodenabschnitt (240) überdeckt ist.

8. Hubschrauberkabine nach Anspruch 7, **wobei** der gewölbte transparente Bodenabschnitt (240) im geschlossenen Zustand der Laderaumschiebetür (24) mindestens teilweise unter die Kabinenbodenfläche (20) ragt.

## Claims

1. A helicopter cabin (2) that can be fastened to a fuselage structure (1) of a helicopter,
encompassing a cabin floor surface (20), which extends from a front area to a rear area of the helicopter cabin (2), wherein front seats (22, 22') and pilot cabin doors (23, 23') are arranged in the front area, and the pilot cabin doors (23, 23') along with a front surface and additional walls comprise part of an outer hull of the helicopter cabin (2) that envelops the cabin floor surface (20),
**characterized in that**
the cabin floor surface (20) of the helicopter cabin (2) exhibits a cutout (a) with a cutout depth (t) directed toward the longitudinal axis (L) in the area of the front seats (22, 22') tapered in the direction of the longitudinal axis (L).

2. The helicopter cabin according to claim 1, wherein the cutout depth (t) of the cutout (a) projects up to the outer edges of the pilot seats (23, 23'), so that a resultant width (B) in the tapered area is smaller than the width of the cabin floor surface (20) in the front area and/or in the rear area at the widest location.

3. The helicopter cabin according to claim 1, wherein the cutout (a) in the cabin floor surface (20) extends in the direction parallel to the longitudinal axis (L) until into the rear area, and hence into the area of the cargo hold sliding door (24).

4. The helicopter cabin according to claim 3, wherein the cutout depth (t) measures at least 8 cm.

5. The helicopter cabin according to one of the preceding claims, wherein a floor section (232) of the pilot cabin door (23, 23') facing the fuselage structure (1) is transparent and convex in design, so that the cutout (a) in the cabin floor surface (20) is at least partially covered by the floor section (232) with the pilot cabin door (23, 23') closed.

6. The helicopter cabin according to claim 5, wherein the convex, transparent floor section (232) projects at least partially under the cabin floor surface (20) in the closed state of the pilot cabin door (23, 23').

7. The helicopter cabin according to claim 3, wherein a floor section (240) of the cargo hold sliding door (24) facing the fuselage structure (1) is transparent and convex in design, so that the cutout (a) in the cabin floor surface (20) is covered at least partially by the floor section (240) in the rear area with the cargo hold sliding door (24) closed.

8. The helicopter cabin according to claim 7, wherein the convex, transparent floor section (240) projects at least partially under the cabin floor surface (20) in the closed state of the cargo hold sliding door (24).

## Revendications

1. Cabine d'hélicoptère (2), laquelle est susceptible d'être fixée sur une structure de fuselage (1) d'un hélicoptère, comprenant une surface de plancher de cabine (20), laquelle s'étend d'une région frontale vers une région arrière de la cabine d'hélicoptère (2), dans la région frontale étant placés des sièges frontaux (22, 22') et des portes de cabine de pilotage (23, 23') et les portes de cabine de pilotage (23, 23') formant ensemble avec une surface frontale et des parois supplémentaires une partie de l'enveloppe extérieure de la cabine d'hélicoptère (2), entourant la surface de plancher de cabine (20),
**caractérisée en ce que**
la surface de plancher de cabine (20) de la cabine d'hélicoptère comporte dans la région des sièges frontaux (22, 22'), taillée dans la direction de l'axe longitudinal (L) une découpe d'une profondeur de découpe (t) dirigée vers l'axe longitudinal (L).

2. Cabine d'hélicoptère selon la revendication 1,
la profondeur de découpe (t) de la découpe (a) saillant jusqu'aux bords extérieurs du siège de pilotage (23, 23'), de sorte qu'il résulte dans la région taillée une largeur résultante (B) qui est inférieure à la largeur de la surface de plancher de cabine (20) dans la région frontale et/ou dans la région arrière sur l'endroit le plus large.

3. Cabine d'hélicoptère selon la revendication 1,
la découpe (a) saillant dans la surface de plancher de cabine (20) dans la direction parallèle à l'axe longitudinal (L) jusque dans la région arrière et ainsi dans la région de la porte coulissante de l'espace de chargement (24).

4. Cabine d'hélicoptère selon la revendication 3,
la profondeur de découpe (t) étant d'au moins 8 cm.

5. Cabine d'hélicoptère selon l'une quelconque des revendications précédentes,
un segment de fond inférieur (232) dirigé vers la structure de fuselage (1) de la porte de cabine de pilotage (23, 23') étant conçu en étant transparent et bombé, de telle sorte que lorsque la porte de cabine de pilotage (23, 23') est fermée, la découpe (a) dans la surface de plancher de cabine (20), soit recouverte au moins partiellement par le segment de fond inférieur (232).

6. Cabine d'hélicoptère selon la revendication 5,
lorsque la porte de cabine de pilotage (23, 23') est fermée, le segment de fond inférieur (232) transparent bombé saillant au moins partiellement sous la surface de plancher de cabine (20).

7. Cabine d'hélicoptère selon la revendication 3,
un segment de fond inférieur (240) de la porte coulissante de l'espace de chargement (24) dirigé vers la surface de fuselage (1) étant conçu en étant transparent et bombé, de telle sorte que lorsque la porte coulissante de l'espace de chargement (24) est fermée, la découpe (a) dans la surface de plancher de cabine (20) dans la région arrière soit recouverte au moins partiellement par le segment de fond inférieur (240).

8. Cabine d'hélicoptère selon la revendication 7,
lorsque la porte coulissante de l'espace de chargement (24) est fermée, le segment de fond inférieur (240) transparent bombé saillant au moins partiellement sous la surface de plancher de cabine (20).
